# EUROPEAN PATENT APPLICATION

(11) **EP 4 553 239 A1**
(43) Date of publication of application: **14.05.2025**
(21) Application number: 24207673.5
(22) Date of filing: 20.10.2024
(51) Int. Cl.: E03B 1/04, E03C 1/28, E03C 1/284

(54) **WATER-SAVING SIPHON WITH RECYCLING SYSTEM**

(30) Priority: 07.11.2023 NL 1044727
(71) Applicant: Osman, Moustafa, 3454KT De Meern Utrecht (NL)
(72) Inventor: Osman, Moustafa, 3454KT De Meern Utrecht (NL)

(57) **Abstract**

The invention relates to conserving and recycling water by adding a device to the drainpipe under the sink, or the drainpipe under a shower or bathtub. The water is collected in a reservoir, allowing it to be easily reused a second time. The invention is a cup siphon, S-siphon or any other form siphon with a tap system. It replaces the original siphon under the sink.

## Description

The invention relates to conserving and recycling water by adding a device to the drainpipe under the sink, or the drainpipe under a shower or bathtub. The water is collected in a reservoir, allowing it to be easily reused a second time. The invention is a cup siphon, S-siphon or any other form siphon with a tap system. It replaces the original siphon under the sink.

### Water-saving siphon with recycling system

The invention relates to conserving and recycling water. It is an innovative way to easily save water during daily household activities. The invention looks like a cup siphon or S-siphon with a tap system. The original siphon is unscrewed and replaced with the invention. With this invention, water can be collected in a reservoir, allowing it to be used a second time.

The product has the shape of a cup siphon or S-siphon (or any other form siphon) depending on which type of drainage system, with a tap system at the bottom. The tap can be opened or closed with a 90° twist lock. When the tap is open, water flows into a water reservoir, which can be a watering can, bucket, or tank. When the tap is closed, the water remains in the siphon and flows towards the usual drainage system. With this system, water that is normally wasted can be collected and reused.

We waste a lot of water on a daily basis, for example, while waiting for the water to warm up or while rinsing fruits and vegetables, washing our face or hands, or some people even let the water run while brushing their teeth. This wastes a lot of fresh water, which not only harms the environment but also costs a lot of money each year.

The invention is designed to be installed under any sink without requiring any major renovation or adjustments. This is what sets it apart from previous inventions. It is a small modification to the water drainage system that any individual can carry out on their own. Instead of having to replace the entire drainage system, only a small component needs to be replaced. Everyone can do this themselves! The invention is made for everyone, in every household.

This makes it very easy to save a lot of water during daily activities, and the recycled water is readily available for many purposes, such as watering plants, providing water to pets or farm animals, watering the garden, washing the car, and so on. In addition to households, the invention could be used in businesses such as restaurants, farms, and offices to save water.

The water-saving siphon can even be installed under the drainage system of a shower or bathtub. This does require modifications and likely a renovation, where the help of a plumber or contractor is needed. Depending on how the water drains, the water-saving siphon can be installed under the drainage system of the shower tray or bathtub. Additionally, a passage through the wall to the outside will need to be created to lead the water to a barrel in the garden. The water can also be used for an irrigation system. This will be especially necessary in warm and dry countries in the coming times.

Depending on the intended purpose for reusing the water, one can use a filter to recycle the water, or only use natural soaps that are not harmful to plants, for example.

To prevent harmful or very dirty water from entering the water reservoir, the direction of the water can be changed by the twist lock on the side of the invention. This prevents contaminated water from entering the reservoir, enabling it to flow towards the normal drainage system while keeping the recycled water clean.

### Explanation of figures

On page 6: the invention
On page 7: the six figures show how the invention can be installed.
The normal cup siphon (first figure) is replaced by the invention (second figure).
The third figure shows that the invention can also be attached under a sink with S-siphon.
The last three figures show what this looks like under a sink.
On page 8: The invention when installed under a bathtub or shower.

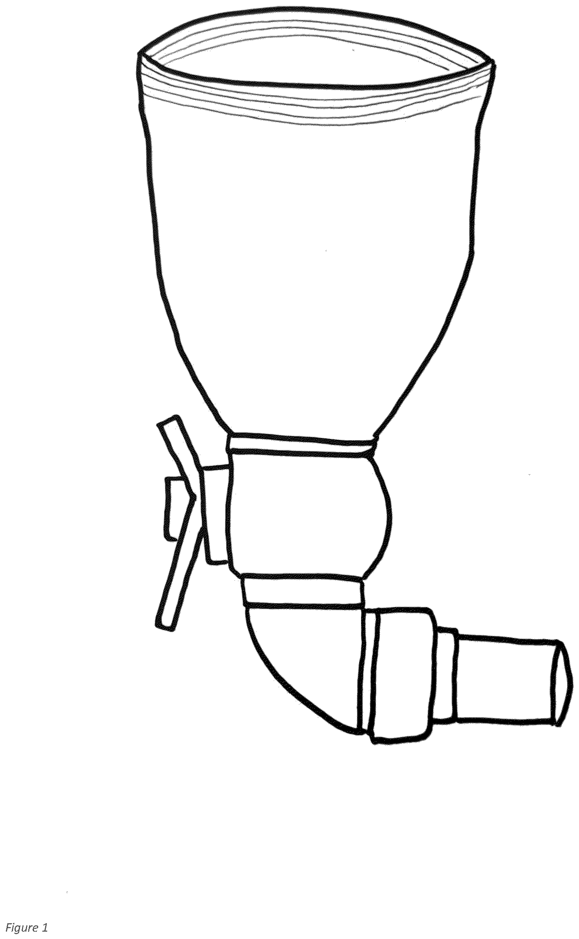

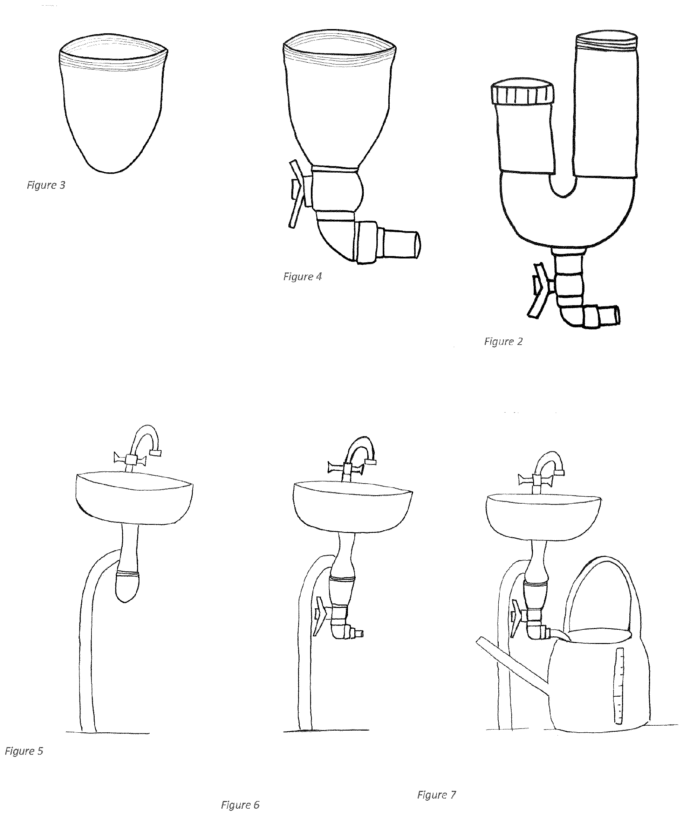

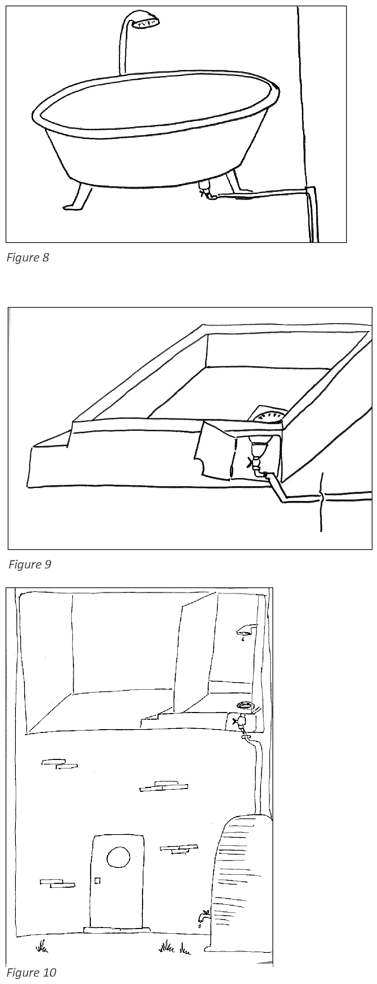

## Claims

1. The invention relates to conserving and recycling water by adding a device to the drainpipe under the sink, or shower or bathtub. The water is collected in a reservoir, allowing it to be easily reused a second time.
